# EUROPÄISCHE PATENTSCHRIFT

(11) **EP 0 402 460 B1**
(45) Veröffentlichungstag und Bekanntmachung des Hinweises auf die Patenterteilung: **07.04.1993**
(21) Anmeldenummer: 90902213.9
(22) Anmeldetag: 04.01.1990
(51) Int. Cl.: G01F 1/58

(54) **ELEKTROMAGNETISCHER DURCHFLUSSMESSER**
ELECTROMAGNETIC FLOW METER
DEBITMETRE ELECTROMAGNETIQUE

(30) Priorität: 05.01.1989 NL 8900021
(43) Veröffentlichungstag der Anmeldung: 19.12.1990
(73) Patentinhaber: Krohne AG, 4019 Basel (CH)
(72) Erfinder: VAN NISTELROOIJ, Petrus, Nicolaas, Johannes, NL-5345 NR Oss (NL); VAN BEKKUM, Aart, Jan, NL-4223 MD Hoornaar (NL)
(74) Vertreter: Ackmann, Günther
(86) Internationale Anmeldenummer: EP9000018
(87) Internationale Veröffentlichungsnummer: WO9007694

(56) Entgegenhaltungen:
- WO-A-83/02000
- GB-A-21 609 82
- PATENT ABSTRACTS OF JAPAN vol. 8, No. 228 (P-308)(1665) 19 October 1984, & JP-A-59 109818
- Automatisierungstechnische Praxis, ATP vol. 28, No. 3, 1986, MUENCHEN DE pages 122 - 129; G. Strohrmann: "ATP-Marktanalyse Durchflussmesstechnik" see page 128, right hand column, paragraphs 1-3

## Beschreibung

Die Erfindung betrifft einen elektromagnetischen Durchflußmesser mit einem druckfesten Meßrohr aus einem wärmebeständigen Material und einem das Meßrohr umschließenden Mantel aus nichtrostendem Stahl, zwischen denen ein abgedichteter Raum vorhanden ist, in dem sich eine zumindest mit Polschuhen und Wickelspulen versehene Magneteinrichtung befindet, wobei ein oder mehrere im Meßrohr angeordnete Meßelektroden vorgesehen sind. Ein derartiger elektromagnetischer Durchflußmesser ist aus der DE 34 23 921 A1 bekannt.

Solche Durchflußmesser werden zum Messen der Geschwindigkeit von Fluiden benutzt und kommen auf unterschiedlichen Gebieten, z.B. in der Lebensmittelindustrie, zur Anwendung.

Das Meßrohr muß aus einem Material bestehen, daß sehr druckfest, chemisch beständig und formfest ist und darüber hinaus einen guten elektrischen Isolator bildet. Diesen Anforderungen genügt insbesondere Keramik, z. B. Al₂O₃, es sind aber auch andere Materialien, wie wärmebeständige Kunststoffe, geeignet. Der Mantel besteht in der Regel aus nichtrostendem Stahl, meistens aus nichtrostendem austhenitischen Stahl (1.4301), der eine große chemische Beständigkeit aufweist und sich durch die Tiefziehtechnik gut verformen läßt. Die letztere Eigenschaft ist bei der Fertigung von Durchflußmessern, deren Außenmantel aus Stahl besteht, wichtig, die niedrige Materialkosten zur Folge hat. Es ist auch möglich, solche Außenmäntel gießtechnisch aus einem austhenitischen Stahl zu fertigen, wo zahlreiche Anwendungen verlangt werden.

Der nicht rostende Stahl, insbesondere der austenitische Stahl, hat aber in nachteiliger Weise einen viel größeren Wärmeausdehnungskoeffizienten als das für das Meßrohr verwendete Material, wie z. B. Keramik oder Kunststoff. Darüber hinaus ist es sehr schwierig, den aus nichtrostendem Stahl bestehenden Mantel am keramischen oder Kunststoff-Rohr zu befestigen.

Insbesondere bei den verschiedenen Anwendungen, bei denen Flüssigkeiten in einem großen Temperaturbereich zu messen sind, ist es wichtig, eine preiswerte und zuverlässige Abdichtung zwischen dem Meßrohr und dem nichtrostenden Stahlmantel sicherzustellen. Weiterhin muß die Abdichtung chemisch beständig sein. Auch muß der Mantel auf eine preiswerte Art auf dem Meßrohr befestigt werden können.

Bei dem aus der DE 34 239 21 A1 bekannten Durchflußmesser besteht die Abdichtung aus einem teuren O-Ring und erfolgt die Befestigung beim Abdichten des das Meßrohr umgebenden Raumes. Eine aus einem O-Ring bestehende Abdichtung hat weiterhin den Nachteil, daß die chemische Beständigkeit vom Material des O-Ringes abhängig ist.

Der Erfindung liegt die Aufgabe zugrunde, die vorgenannten Schwierigkeiten zu beseitigen und eine fertigungstechnisch einfache und preiswerte Abdichtung zwischen dem Material des Meßrohres und dem aus nichtrostendem' Stahl bestehenden Material zu schaffen, wobei die Abdichtung ebenso beständig wie der aus nichtrostendem Stahl bestehende Mantel ist und außerdem für große Temperaturbereiche bis hin zu höheren Betriebstemperaturen geeignet ist.

Diese Aufgabe wird bei einem dem Oberbegriff des Anspruchs 1 entsprechenden elektromagnetischen Durchflußmesser dadurch gelöst, daß wenigstens ein Ende des Mantels unter Bildung eines konzentrischen Innenrings umgebogen ist und um den Innenring herum ein Kompensationsring aus einem Stahl fest angeordnet und der Mantel bei Zimmertemperatur auf das Meßrohr aufgebracht worden ist, wobei der Stahl des Kompensationsrings einen Wärme-Ausdehnungskoeffizienten aufweist, der zwischen dem des Materials des Meßrohres und dem des nichtrostenden Stahls des Mantels liegt und das Elastizitätsverhältnis von Mantel, Kompensationsring und Meßrohr derart gewählt ist, daß der Kompensationsring auch bei höheren Temperaturen den Innenring des Mantels gegen das Meßrohr andrückt und die Abdichtung sichergestellt wird.

Bei einem Durchflußmesser mit einem Mantel aus einem nichtrostenden austhenitischen Stahl besteht der Kompensationsring vorzugsweise aus einem nichtrostenden ferritischem Stahl.

Die Erfindung ist in der Zeichnung anhand eines Ausführungsbeispiels näher erläutert; es zeigt
- Fig. 1: einen erfindungsgemäßen Durchflußmesser in einem Längsschnitt und
- Fig. 2a und 2b: einen Abschnitt des aus nichtrostendem Stahl bestehendem und mit einem Innenring versehenen Mantels sowie den darin angeordneten Kompensationsring vor und nach dem Aufpressen auf das Meßrohr.

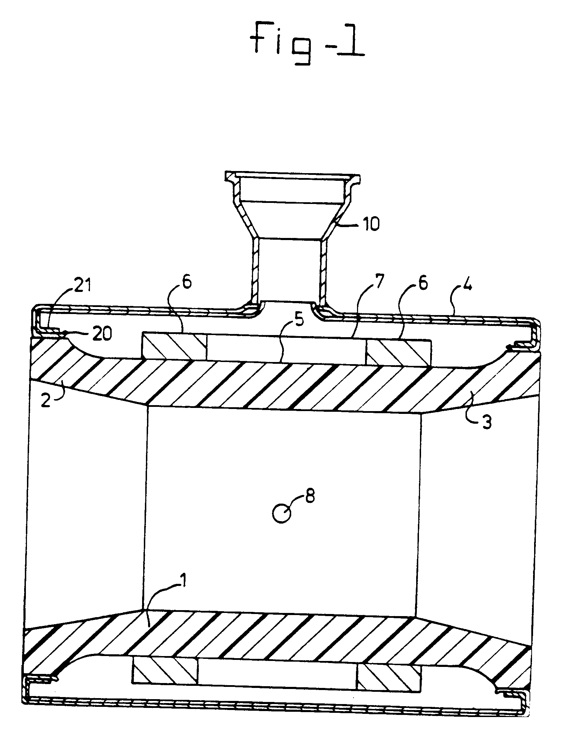

Die in Fig. 1 in einem Längsschnitt dargestellte, bevorzugte Ausführung eines erfindungsgemäßen Durchflußmessers weist ein Meßrohr 1 auf, das an den Enden mit zwei etwas radial nach außen weisenden Flanschen 2, 3 versehen ist. Das Meßrohr 1 ist an beiden Enden an eine von der zu messenden Flüssigkeit durchströmte Leitung angeschlossen. Das Meßrohr 1 besteht aus einem keramischen Material (Al₂O₃) oder einem anderen geeigneten Material, z. B. Kunststoff, das druckfest, chemisch beständig und formfest ist und einen guten elektrischen Isolator bildet. Um das Meßrohr 1 herum liegt ein Mantel 4 aus rostfreiem Stahl, in der Regel aus austenitischem Stahl. In dem abgedichteten Hohlraum zwischen dem Stahlmantel 4 und dem Meßrohr 1 ist eine für die magnetisch induktive Durchflußmessung geeignete Magneteinrichtung angeordnet. Diese besteht unter anderem aus um das Meßrohr 1 herum liegenden Polschulen 5 und Wickelspulen 6 sowie einem den Magnetkreis schließenden Joch 7. In einer senkrecht zur Symmetriefläche der Polschuhe 5 verlaufenden Achse sind am Meßrohr 1 zwei Meßsensoren 8 angeordnet. Die in der Zeich nung nicht dargestellte Verkabelung wird durch eine Öffnung 10 nach außen geführt.

Bei den zum Stand der Technik gehörenden Durchflußmessern erfolgt die Abdichtung durch eine Schweißverbindung zwischen dem aus nichtrostendem Stahl bestehenden Mantel und dem Meßrohr mittels einer im Hohlraum angebrachten Beschichtung oder durch einen speziell ausgebildeten O-Ring.

Um nun eine fertigungstechnisch einfache und preiswerte Abdichtung zwischen dem z. B. aus Keramik oder Kunststoff bestehenden Meßrohr 1 und dem nichtrostenden Mantel 4 aus austenitischem Stahl zu schaffen, die für höhere Betriebstemperaturen und einen weiten Temperaturbereich geeignet ist, ist der aus Stahl (z. B. 1.4301) bestehende Mantel 1 an wenigstens einem Ende zweifach so nach innen gebogen, daß ein konzentrischer Innenring bzw. Mantelring 20 gebildet wird.

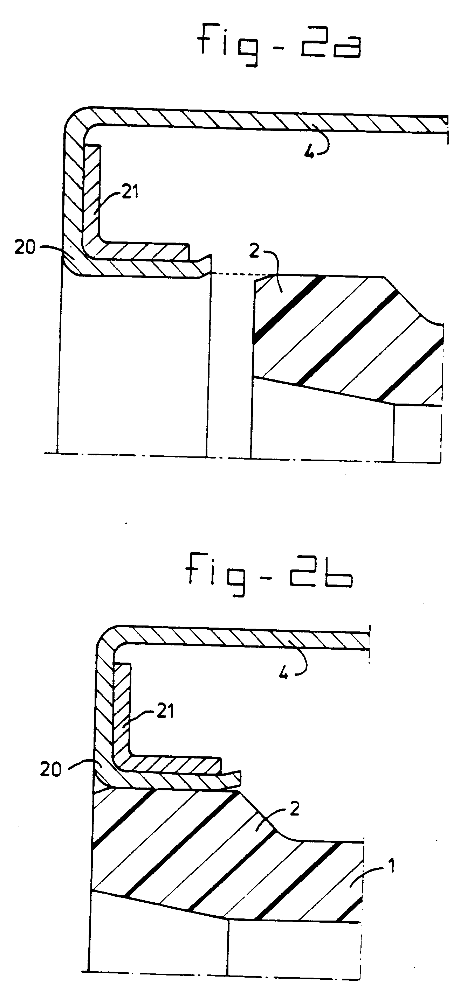

Die Fig. 2a und 2b zeigen einen Abschnitt des Mantelringes 20 vor und nach dem Aufpressen auf den Flansch 2 des Meßrohres 1.

Der Mantel 4 aus nichtrostendem austenitischen Stahl wird in mehreren Arbeitsgängen tiefgezogen. Ein selbständiger Kompensationsring 21 aus einem nichtrostenden ferritischen Stahl (z. B. 1.4016) wird ebenfalls für sich tiefgezogen. Vor dem letzten Arbeitsgang beim Tiefziehen des aus austhenitischem Stahl bestehenden Mantels 4 wird der Kompensationsring 21 in den umgebogenen Innenring 20 des Mantels 4 eingelegt. Anschließend wird der Kompensationsring 21 zusammen mit dem Mantel hochpräzise auf Maß gezogen, so daß der Innenring 20, wie in Fig. 2a kenntlich gemacht ist, ein genau definiertes negatives Spiel zu dem Flansch 2 des beispielsweise aus Keramik bestehenden Meßrohres 1 hat. Schließlich wird der Mantel 4 zusammen mit dem einliegenden Kompensationsring 21 auf den Flansch 2 des Meßrohres 1 aufgepreßt, wie es in Fig. 2b gezeigt ist.

Diese Ausführung hat den wesentlichen Vorteil, daß das Material des Kompensationsrings 21, nämlich rostfreier ferritischer Stahl, einen linearen Wärme-Ausdehnungskoeffizienten von etwa 10x10⁻⁶ hat, während der austenitische Stahl einen Wärme-Ausdehnungskoeffizienten von etwa 18-10⁻⁶ und Keramik einen solchen von 8,5x10⁻⁶ hat. Bei den durch eine Temperaturerhöhung verursachten Ausdehnungsunterschieden zwischen Kompensationsring 21, Mantel 4 und keramischem Meßrohr 1 dehnt sich der Kompensationsring 21 bei einer Temperaturerhöhung weniger aus als der Innenring 20. Infolgedessen klemmt sich der Kompensationsring 21 bei einer Temperaturerhöhung stärker am Innenring 20 fest. Durch eine richtige Auswahl der Elastizitätsverhältnisse von Mantel 4, Kompensationsring 21 und Meßrohr 1 bleibt der Andruck, mit dem der Kompensationsring 21 den Innenring 20 gegen das Meßrohr 1 andrückt, auch bei höheren Temperaturen erhalten. Durch diese Maßnahme ist der Durchflußmesser bei höheren Betriebstemperaturen, z. B. bis zu 300°C, verwendbar, wie es bei den bekannten Durchflußmessern nicht der Fall ist. Letztere konnten nur bis zu einer Temperatur von etwa 120° eingesetzt werden, weil die Abdichtung bei höheren Temperaturen nicht mehr sichergestellt war. Die maximale Temperatur wird so gewählt, daß das Meßrohr 1 ausreichend an dem Stahlmantel befestigt bleibt. Hierbei bleibt die Abdichtung über den ganzen Temperaturbereich von etwa -20° bis 300°C elastisch.

## Patentansprüche

1. Elektromagnetischer Durchflußmesser mit einem druckfesten Meßrohr (1) aus einem wärmebeständigen Material und einem das Meßrohr (1) umschließenden Mantel (4) aus nichtrostendem Stahl, zwischen denen ein abgedichteter Raum vorhanden ist, in dem sich eine zumindest mit Polschuhen (5) und Wickelspulen (6) versehene Magneteinrichtung befindet, wobei ein oder mehrere im Meßrohr (1) angeordnete Meßelektroden (8) vorgesehen sind, dadurch gekennzeichnet, daß wenigstens ein Ende des Mantels (4) unter Bildung eines konzentrischen Innenrings (20) umgebogen ist und um den Innenring (20) herum ein Kompensationsring (21) aus einem Stahl fest angeordnet und der Mantel (4) bei Zimmertemperatur auf das Meßrohr (1) aufgebracht worden ist, wobei der Stahl des Kompensationsrings (21) einen Wärme-Ausdehnungskoeffizienten aufweist, der zwischen dem des Materials des Meßrohres (1) und dem des nichtrostenden Stahls des Mantels (4) liegt und das Elastizitätsverhältnis von Mantel (4), Kompensationsring (21) und Meßrohr (1) derart gewählt ist, daß der Kompensationsring (21) auch bei höheren Temperaturen den Innnenring (20) des Mantels (4) gegen das Meßrohr (1) andrückt und die Abdichtung sichergestellt wird.

2. Durchflußmesser nach Anspruch 1, mit einem Mantel (4) aus austhenitischem Stahl, dadurch gekennheichnet, daß der Kompensationsring (21) aus nichtrostendem ferristischem Stahl besteht.

3. Durchflußmesser nach Anspruch 1 oder 2, dadurch gekennzeichnet, daß der Mantel (4) und der Kompensationsring (21) in getrennten Arbeitsgängen tiefgezogen worden sind, daß der Kompensationsring (21) vor dem letzten Tiefziehschritt in den Ring (20) des Mantels (4) eingelegt worden ist und zusammen mit dem Mantel (4) auf ein Maß mit einem negativen Spiel gegenüber dem Außendurchmesser des Meßrohres (1) tiefgezogen worden ist und daß der Mantel (4) mit dem Kompensationsring (21) bei Zimmertemperatur auf das Meßrohr (1) gepreßt worden ist.

4. Durchflußmesser nach einem der Ansprüche 1 bis 3, dadurch gekennzeichnet, daß das Meßrohr (1) aus einem keramischen Material besteht.

5. Durchflußmesser nach einem der Ansprüche 1 bis 3, dadurch gekennzeichnet, daß das Meßrohr (1) aus Kunststoff besteht.

6. Durchflußmesser nach einem der Ansprüche 1 bis 5, dadurch gekennzeichnet, daß die Temperatur der zu messenden Stoffe und bei denen der Durchflußmesser betrieben werden kann, zwischen -20° und 300°C liegt.

## Claims

1. An electromagnetic flow meter with a pressure-resistant measurement tube (1) of heat-resistant material and a casing (4) of stainless steel embracing the measurement tube (1), between which there is a sealed space containing a magnetic device provided at least with pole pieces (5) and windings (6), one or more measurement electrodes (8) being situated in the measurement tube (1), characterised in that at least one end of the casing (4) is bent back to form a concentric inner ring (20), and around the inner ring (20) a compensation ring (21) of steel is fixed and the casing (4) is applied to the measurement tube (1) at room temperature, the steel of the compensation ring (21) having a coefficient of thermal expansion which is between that of the material of the measurement tube (1) and that of the stainless steel of the casing (4), and the elasticity ratio of the casing (4), compensation ring (21) and measurement tube (1) is so selected that the compensation ring (21) even at higher temperatures urges the inner ring (20) of the casing (4) onto the measurement tube (1) and a good seal is ensured.

2. A flow meter as claimed in claim 1, with a casing (4) of austenitic steel, characterised in that the compensation ring (21) is of stainless ferritic steel

3. A flow meter as claimed in claim 1 or 2, characterised in that the casing (4) and compensation ring (21) are deep-drawn in separate operations, the compensation ring (21) is placed in the ring (20) of the casing (4) before the last deep-drawing step and is deep-drawn to size together with the casing (4) with negative clearance relative to the external diameter of the measurement tube (1), and the casing (4) with the compensation ring (21) is pressed onto the measurement tube (1) at room temperature.

4. A flow meter as claimed in any of claims 1 to 3, characterised in that the measurement tube is of ceramic material.

5. A flow meter as claimed in any of claims 1 to 3, characterised in that the measurement tube is of synthetic plastic material.

6. A flow meter as claimed in any of claims 1 to 5, characterised in that the temperature of the substances to be measured and at which the flow meter can be operated is between -20°C and 300°C.

## Revendications

1. Débitmètre électromagnétique, comprenant un conduit de mesure (1) résistant à la pression en un matériau résistant à la chaleur et une enveloppe (4) en acier inoxydable entourant le conduit de mesure (1), entre lesquels est présent un espace étanche, dans lequel se trouve un dispositif magnétique muni au moins de pièces polaires (5) et de bobines d'enroulement (6), une ou plusieurs électrodes de mesure (8) étant prévues dans le tube de mesure (1), caractérisé en ce qu'au moins une extrémité de l'enveloppe (4) est recourbée en formant un anneau intérieur (20) concentrique et, autour de l'anneau intérieur (20), est fixé un anneau de compensation (21) en acier et l'enveloppe (4) est enfilée à la température ambiante sur le tube de mesure (1), l'acier de l'anneau de compensation (21) ayant un coefficient de dilatation thermique compris entre celui du matériau du tube de mesure (1) et celui de l'acier inoxydable de l'enveloppe (4), et l'élasticité de l'enveloppe (4) de l'anneau de compensation (21) du tube de mesure (1) étant choisie de façon que l'anneau de compensation (21) applique, même à de hautes températures, l'anneau intérieur (20) de l'enveloppe (4) sur le tube de mesure (1) et assure l'étanchéité.

2. Débitmètre suivant la revendication 1, comprenant une enveloppe (4) en acier austénitique, caractérisé en ce que l'anneau de compensation (21) est en acier ferritique inoxydable.

3. Débitmètre suivant la revendication 1 ou 2, caractérisé en ce que l'enveloppe (4) et l'anneau de compensation (21) sont fabriqués par emboutissage profond dans des passes opératoires distinctes, en ce que l'anneau de compensation (21) est inséré avant le dernier stade d'emboutissage profond dans l'anneau (20) de l'enveloppe (4), et est embouti en même temps que l'enveloppe (4) à une dimension présentant un jeu négatif, par rapport au diamètre extérieur du tube de mesure (1), et en ce que l'enveloppe (4) est repoussée avec l'anneau de compensation (21), température ambiante, sur le tube de mesure (1).

4. Débitmètre suivant l'une des revendications 1 à 3, caractérisé en ce que le tube de mesure (1) est en un matériau céramique.

5. Débitmètre suivant l'une des revendications 1 à 3, caractérisé en ce que le tube de mesure (1) est en matière plastique.

6. Débitmètre suivant l'une des revendications 1 à 5, caractérisé en ce que la température des substances à mesurer et pour lesquelles on peut utiliser le débitmètre est comprise entre -20°C et 300°C.
